# EUROPÄISCHE PATENTSCHRIFT

(11) **EP 0 953 007 B1**
(45) Veröffentlichungstag und Bekanntmachung des Hinweises auf die Patenterteilung: **14.09.2005**
(21) Anmeldenummer: 98901945.0
(22) Anmeldetag: 07.01.1998
(51) Int. Cl.: C08K 3/32, C08L 33/12

(54) **VERFAHREN ZUR HERSTELLUNG FARBNEUTRALER POLYMETHYLMETHACRYLAT-FORMMASSEN**
PROCESS FOR PRODUCING POLYMETHYLMETHACRYLATE MOULDING MATERIALS WITH A NEUTRAL COLOUR
PROCEDE DE FABRICATION DE MATIERES MOULABLES EN POLYMETHYLMETHACRYLATE DE COULEUR NEUTRE

(30) Priorität: 17.01.1997 DE 19701441
(43) Veröffentlichungstag der Anmeldung: 03.11.1999
(73) Patentinhaber: Röhm GmbH & Co. KG, 64293 Darmstadt (DE)
(72) Erfinder: NUMRICH, Uwe, D-64331 Weiterstadt (DE); WICKER, Michael, D-64342 Seeheim-Jugenheim (DE); ALBRECHT, Klaus, D-55129 Mainz (DE); VETTER, Heinz, D-64380 Ro dorf (DE); JAKSCH, Hermann, D-64372 Ober-Ramstadt (DE); MOHR, Ernst, D-64653 Lorsch (DE)
(86) Internationale Anmeldenummer: PCT/EP1998/000045
(87) Internationale Veröffentlichungsnummer: WO 1998/031736

(56) Entgegenhaltungen:
- EP-A- 0 465 049
- EP-A- 0 469 372
- EP-A- 0 776 931

## Beschreibung

### Gebiet der Erfindung

Die Erfindung betrifft das Gebiet der Formmassen, insbesondere von Produkten auf Basis Polymethylmethacrylat (PMMA), die so vergilbungsstabil und hochtransparent sind, daß auch der Kanteneindruck von daraus hergestelltem Plattenmaterial farbneutral ist bzw. keinen Gelbstich erkennen läßt

### Stand der Technik

Formteile aus Polymethylmethacrylat (PMMA) zeichnen sich durch gute Witterungsbeständigkeit und hervorragende Transparenz aus. PMMA-Plattenmaterial, das aus Formmassen durch Extrusion oder durch Spritzguß hergestellt wird, erscheint in der Aufsicht praktisch farbneutral. Dies gilt allerdings nicht für den Kanteneindruck. Da eine Platte, von der Seite betrachtet, optisch eine sehr große Schichtdicke besitzt, wird hier ein sonst nicht wahrnehmbarer Gelbstich deutlich sichtbar.
In der Technik setzt man zur Eliminierung des gelbstichigen Kanteneindrucks Bläuungsmittel ein, die man der Formmasse vor der Verarbeitung zusetzt. Dabei wird ein bläulicher Kanteneindruck erzeugt, der bei rein visueller Beurteilung vom Betrachter zwar meist mit hoher Transparenz assoziiert wird, die Messung des Transmissionsgrades nach z.B. DIN 5033 (D65/10) zeigt jedoch, daß mit zunehmender Einsatzkonzentration an Bläuungsmittel der Transmissionsgrad abnimmt. Diese Lösung ist weiterhin nicht ideal, da aufgrund der Subjektivität bei rein visueller Beurteilung über eine sehr große Schichtdicke (Kanteneindruck) für manche Betrachter auch ein schmutziggrauer oder auch ein rotviolettstichiger Farbeindruck entsteht. Außerdem ist die zur Kompensation des Gelbstiches notwendige Menge an Bläuungsmittel so hoch, daß bestimmte Anwendungsgebiete auf Grund von behördlichen Auflagen ausscheiden müssen. So lassen z.B. die für den Gebrauch in Lebensmittelkontakt aufgestellten Normen (Regulations of the Food and Drug Administration, FDA, für die USA oder die entsprechenden EU-Richtlinien für den Bereich der Europäischen Union) nur den Einsatz einiger weniger Farbmittel in Gebrauchsgegenständen aus PMMA zu. Darüber hinaus wird die Konzentration der Bläuungsmittel auf sehr geringe Einsatzmengen, oftmals auf unter 10 ppb limitiert "(=level of toxicological insignificance").

Solche niedrige Einsatzmengen an Bläuungsmitteln reichen jedoch nicht aus, um den gelblichen Kanteneindruck vollständig zu kompensieren. Bislang sind demnach aus dem Stand der Technik keine aus PMMA-Formmassen hergestellten Platten oder Formkörper bekannt, deren Kanteneindruck als farbneutral bezeichnet werden könnte, ohne daß Bläuungsmittel in Mengen oberhalb der von den Behörden festgesetzten Schwellenwerte enthalten sind.

Allgemeine Lösungsvorschläge für die Verhinderung oder Reduzierung eines Gelbstiches in thermoplastischen Kunststoffen liegen in großer Zahl vor. Z.B. ist der Einsatz von Antioxidantien, die u.a. die Verfärbung von Kunststoff-Formmassen bei thermischer Belastung verhindern sollen, bekannt (vgl. beispielweise Kirk-Othmer, Encyclopedia of Chemical Technology, 3rd. Ed., Vol. 3, Seite 133, Wiley, New York, 1978). Antioxidantien werden fallweise auch den Formmassen vor der Verarbeitung, also beim Compoundierschritt zugegeben. So wird gemäß der japanischen Anmeldung Kokai Tokkyo Koho JP 60 123 547 eine Verringerung der Verfärbung von Copolymerisaten aus Methylmethacrylat-, Styrol- und Maleinsäureanhydrid- Monomereinheiten unter Spritzgußbedingungen bei höheren Temperaturen beobachtet, wenn solche Copolymerisate vor der Verarbeitung mit wenigstens einem Phosphaphenanthren-Derivat und zusätzlich einem sterisch gehinderten Phenol, einem Thiopropionsäureester oder einem Phosphorsäureester als Stabilisatoren gegen den oxidativen Abbau versetzt werden.

Jpn. Kokai Tokkyo Koho JP 60 120 735 beschreibt Copolymerisate aus Methylmethacrylat, Vinylaromat und einpolymerisierten cyclischen Anhydriden, denen zur Erhöhung der thermischen Stabilität und zur Vermeidung der Verfärbung solcher Copolymerisate bei thermischer Beanspruchung in der Schmelze, beispielsweise im Spritzguß, Phosphorsäureester und weitere Stabilisatoren auf Basis sterisch gehinderter Phenole zugegeben werden.

In Jpn. Kokkai Tokkyo Koho JP 03 167 245 wird die Stabilisierung von Copolymerisaten aus Methylmethacrylat, N-substituierten Maleinimiden und weiteren copolymerisierbaren Monomeren mit Verbindungen, ausgewählt aus der Gruppe der alkylsubstituierten Triarylphosphite, der Dialkylpentaerythroldiphosphite, sowie der Phosphaphenanthren-Derivate beansprucht.

Jpn. Kokkai Tokkyo Koho JP 63 163 306 umfaßt Copolymerisate aus Methylmethacrylat und C₈- bis C₂₀-Alkylmethacrylat als Kernmaterial für optische Lichtleiterfasern, die als Stabilisatoren Phosphite, wie beispielsweise sterisch gehinderte Diarylpentaerythroldiphosphite, oder Thiophosphite zur Vermeidung der Verfärbung der Copolymerisate bei thermischer Belastung enthalten.
In den hier genannten 4 japanischen Patenten sind durchwegs sterisch gehinderte, organische Phosphite beansprucht, oder organische Phosphite zusammen mit sterisch gehinderten Phenolen. Anorganische, reduzierende Phosphorverbindungen werden nicht genannt.

Auch das deutsche Gebrauchsmuster 2 95 04 693.7 beschreibt die Verwendung von sterisch gehinderten organischen Phophitverbindungen in Formmassen aus Copolymerisaten bestehend aus den Monomereinheiten von Alkylmethacrylat, Vinylaromat und Maleinsäureanhydrid, sowie gegebenenfalls Alkylacrylat. Die organischen Phosphorverbindungen werden fallweise auch dem fertigen, granulierten oder gemahlenen Polymerisat vor der Weiterverarbeitung zugesetzt.

Aus dem Stand der Technik sind auch anorganische, reduzierend wirkende Phosphorverbindungen als Stabilisatoren gegen eine Gelbverfärbung von Formmassen bei thermischer Belastung bekannt.

In der EP-A 576 877 wird ein Polymerisat auf Basis Polymethacryl- und Polyacrylimid mit niedrigem Gelbwert beschrieben, wobei Salze der Phosphin- oder Phosphonsäure bereits während der Imidierungsreaktion zugesetzt werden. Die Einsatzmengen an den Phosphorverbindungen liegen hoch, vermutlich um einen Wirkungsverlust in den nachfolgenden Verarbeitungsstufen auszugleichen. Es werden bevorzugt Mengen von 0.1-1 Gew.-% bezogen auf die Menge an zu imidierendem Polymeren eingesetzt.

EP-A 0 516 131 A1 beschreibt witterungsbeständige Kunststoffzusammensetzungen, die einen UV-Absorber und ein Hypophosphit enthalten. UV-Absorber können in Mengen von 0,01 bis 10 Gew.-% enthalten sein, Hypophosphit in einer Menge von 0,001 bis 100 Gew.-% bezogen auf den enthaltenen UV-Absorber, d.h. in einem extrem weiten Bereich von 0,1 ppm bis 10 Gew.-%. Die witterungsbeständig machenden Zusätze sind für eine Vielzahl von Kunststoffe, darunter auch Polymethylmethacrylat, geeignet.

Auch für schlagzähmodifizierte PMMA-Formmassen sind Mittel zur Reduzierung von Verfärbung, insbesondere von Gelbstich bekannt. Diese Formmassen enthalten durch ihren mehrphasigen Aufbau, z.B. bei Einbettung einer Latex-Dispersion mit Kern-Schale-Aufbau als Zähphase in eine harte Matrix wie PMMA herstellungsbedingt besonders viele Polymerisationshilfsstoffe, wie vor allem Emulgatoren und Puffersalze.

EP-A 465 049 (US 5 063 259) beschreibt ein Verfahren zur Herstellung von klaren, schlagzäh-modifizierten Acryl-Kunststoffen mit verbesserter Farbqualität, insbesondere geringerer Vergilbung, durch den Zusatz von reduzierenden Verbindungen wie z. B. Na-Hypophosphit zu Emulsionspolymerisaten, vorzugsweise mit Kern/Schale-Aufbau, auf Basis von Methylmethacrylaten. Die Einsatzmengen können anspruchsgemäß 50 - 250 ppm bezogen auf die Emulsion betragen. Die Emulsionspolymerisate werden anschließend in eine Polymethylmethacrylat-Matrix eingearbeitet. Es ist auch beschreiben das Na-Hypophosphit zunächst der Polymermatrix zuzusetzen (100 ppm) und anschließend 1 : 1 mit dem Modifier zu vermischen, so daß eine Endkonzentration 50 ppm resultiert .

In der deutschen Patentanmeldung 1 95 44563.5 wird demgegenüber gelehrt, eine viel geringere Menge an reduzierend wirkenden anorganischen Phosphorverbindungen in einer späteren Phase der Verarbeitung, nämlich im Compoundierschritt zuzusetzen, wodurch die Vergilbung bei thermischer Belastung wie z.B. bei der Herstellung von Formkörpern weitgehend unterbunden wird.

Eine ähnliche Lehre gibt die deutsche Patentanmeldung 1 95 44562.7 bezüglich des Zugabemodus der reduzierend wirkenden anorganischen Phosphorverbindungen. Sie werden im Compoundierschritt in einer Menge von 0.01 bis 1 Gewichts-% einer Formmasse auf der Basis von Poly(meth)acrylimid zugesetzt und verbessern vor allem die Farbstabilität bei thermischer Belastung. Sie verhindern dabei anscheinend durch ihre reduzierende Wirkung die oxidationsbedingte Entstehung von Chromophoren aus den Amid- und Imid-Struktureinheiten.

In der europäischen Patentanmeldung mit der Anmeldenummer 96 111 330.5 werden mit ethoxylierten Fettaminen ausgerüstete staubabweisende PMMA-Formmassen beschrieben, denen ebenfalls reduzierend wirkende anorganische Phosphorverbindungen zugesetzt werden, um die vergilbende Wirkung der Fettamine zu unterbinden. Auch in diesem Fall werden die reduzierend wirkenden anorganischen Phosphorverbindungen erst beim Compoundieren zugegeben.

In den vorgenannten Patentanmeldungen können die in den Formmassen enthaltenen Verunreinigungen konkret bezeichnet werden, die für die Vergilbung verantwortlich sind. Das gilt nicht für Formmassen auf Basis PMMA, die zu ihrer Herstellung kaum Hilfsstoffe benötigen und deren Monomere keine Chromophoren enthalten.

### Aufgabe und Lösung

Der Erfindung lag die Aufgabe zugrunde, ein Verfahren zu finden, das die Herstellung von Formkörpern aus Formmassen auf Basis von Polymethylmethacrylat (PMMA) erlaubt, die auch in dicker Schicht farbneutral wirken. Dies betrifft vor allem den Kanteneindruck von Plattenmaterial. Zugleich sollte die hohe optische Qualität des PMMAs nicht merklich beeinträchtigt werden, d. h. die Transmission nach DIN 5033/5036 (Lichttransmissionsgrad für Tageslicht (D65)) des PMMAs soll bei einer Schichtdicke von 100 mm immer noch im Bereich von 89 - 92 % liegen..

Weiters sollen solche farbneutrale Formkörper durch ein einfaches Verfahren kostengünstig in einem Schritt hergestellt werden können. Da die Einsatzmengen an reduzierend wirkenden anorganischen Phosphorverbindungen als Mittel der Wahl sehr niedrig sein sollten, nämlich unter 30 ppm bezogen auf fertige Formmasse, bevorzugt sogar unter 20 ppm, war eine Methode zu finden, um so kleine Mengen an Reagens homogen in die Formmasse einarbeiten zu können. Schließlich sollte das Verfahren ermöglichen, den gewünschten farbneutralen Kanteneindruck der aus den erfindungsgemäßen Formmassen FM hergestellten Formkörper FK mit Zusatzmengen von unter 10 ppb an Bläuungsmitteln zu erzielen, um auch einen Einsatz der Formkörper z.B. in Kontakt mit Lebensmitteln ermöglichen zu können.

Die Aufgabe wurde gelöst durch ein Verfahren zur Herstellung von Formmassen FM, deren daraus hergestellte Formkörper FK auch in großer Schichtdicke gelbstichfrei sind und bei einer Schichtdicke von 100 mm eine Transmission von 89 - 92 % aufweisen, bestehend aus einem Polymerisat PM, aufgebaut aus 80-100 Gewichtsprozent Methylmethacrylat und 0-20 Gewichtsprozent C₁- bis C₄-Alkylester der Acrylsäure
dadurch gekennzeichnet,
daß dem Polymerisat PM im auspolymerisierten Zustand 0.0005 bis 0.005 Gewichtsprozent einer oder mehrerer reduzierend wirkender anorganischer Phosphor-Verbindungen AP zugesetzt werden, welche ausgewählt sind aus der Gruppe bestehend aus Phosphinsäure und Phosphonsäure und deren Alkalimetall-, Erdalkalimetall- und Aluminium- sowie deren Ammoniumsalzen, wobei das Ammoniumion mit bis zu vier C₁-C₄-Alkyl- und/oder C₅-C₈-Cycloalkylgruppen substituiert sein kann.

### Das Polymerisat PM

Das Polymerisat PM besteht aus aus 80-100 Gewichtsprozent Methylmethacrylat und 0-20 Gewichtsprozent C₁- bis C₄-Alkylester der Acrylsäure. Das Polymerisat PM wird auch als PMMA-Standard-Formmasse bezeichnet. Das Polymerisationsverfahren selbst berührt die vorliegende Erfindung nicht, der diesbezügliche Stand der Technik wird vorausgesetzt.

Das Molekulargewicht M_{W} (Gewichtsmittel) des Polymerisats PM kann im Bereich von 50.000 bis 300.000, bevorzugt von 80.000 bis 250.000, besonders bevorzugt bei 100.000 bis 200.000, insbesondere 130.000 bis 190.000 liegen . Die Bestimmung des Molekulargewichts M_{W} kann beispielsweise per Gelpermeationschromatographie oder per Streulichtmethode erfolgen (siehe z. B. H. F. Mark et al., Enzyclopedia of Polymer Science and Engineering, 2nd. Ed., Vol. 10, Seiten 1 ff, J. Wiley, 1989)

Nach der Polymerisation werden aus dem Polymerisat die flüchtigen Bestandteile, insbesondere Restmonomere auf an sich bekannte Weise abgezogen, wie z.B. durch Entgasung. Diese kann in mehreren Stufen unter abnehmendem Druck bzw. unter Vakuum geschehen. Geeignete Anlagen zur Entspannungsverdampfung sind allgemein gebräuchlich. Die letzten Anteile an flüchtigen Bestandteilen werden in der Regel in einem Entgasungsextruder bei Temperaturen von 220 bis 280°C unter einem Druck von 10 bis 150 mbar (1x10³ bis 1.5x 10⁴ Pa) entgast. Nach dem Durchlaufen der Entgasungszone wird die entgaste Formmassenschmelze in einer Kompressionszone des Extuders auf hohen Druck gebracht und zu einem Strang oder einem Strangbündel extrudiert. Die Stränge werden in üblicher Weise unter die Erweichungstemperatur abgekühlt und zu einem handelsfähigen Formmassengranulat zerteilt. Die Kühlung kann vor, während oder nach der Zerteilung vorgenommen werden.

Die erfindungsgemäße Einarbeitung der reduzierend wirkenden anorganischen Phosphorverbindungen AP kann entweder durch Zumischen zum fertigen Granulat oder durch Zumischen in den Schmelzestrom im Entgasungsextruder, bevorzugt nach der letzten Entgasungszone erfolgen. Auf jeden Fall erfolgt die Dosierung zum bereits fertig auspolymerisierten Polymerisat PM.

### Die reduzierenden anorganischen Phosphorverbindungen AP

Die reduzierend wirkenden Phosphorverbindungen AP enthalten Phosphor in den Oxidationsstufen +1 oder +3. Technisch leicht zugänglich sind hierbei Salze der Phosphinsäure (Hypophosphite) und der Phosphonsäure (sekundäre Phosphite), sowie die freien Säuren selbst. Es spielt dabei keine Rolle, ob die Salze oder die freien Säuren in der ortho- oder der meta-Form oder auch z.B. als Dimere vorliegen. Verwendbar sind.Alkali-, Erdalkali-, Aluminium- und Ammoniumsalze, wobei das Ammoniumion mit bis zu vier C₁-C₄-Alkyl- und/oder C₅-C₈-Cycloalkylgruppen substituiert sein kann. Organische, reduzierend wirkende Phosphorverbindungen, ausgewählt aus der Gruppe der aliphatischen oder monoarylaliphatischen Ester sind weit weniger wirksam. Dies gilt vor allem für die verschiedenen Antioxidantien des Standes der Technik auf Basis organischer Phosphite.

Besonders effektiv und auch preisgünstig erhältlich ist Natriumhypophosphit Seine Verwendung ist eine bevorzugte Ausführungsform der Erfindung. Obwohl es laut Literatur thermisch leicht unter Disproportionierung zerfällt, hat es sich für die Zwecke der Erfindung gut bewährt. Der erfindungsgemäße Zugabemodus verhindert anscheinend eine vorzeitige thermische Zersetzung dieses reduzierenden Agens.

Thermisch stabiler sind Erdalkalihypophosphite, wie z.B. Calciumhypophoshit. Es hat sich nur herausgestellt, daß insbesondere höhere Mengen an Calciumhypophosphit zu Trübungen in der Formmasse bzw. im daraus hergestellten Formkörper führen können.
Es können auch Mischungen verschiedener reduzierend wirkender anorganischer Phosphorverbindungen eingesetzt werden.

Unerwartet im Vergleich zum Stand der Technik betreffend die Verwendung von reduzierenden anorganischen Phosphorverbindungen ist, daß erfindungsgemäß bereits geringste Konzentrationen davon ausreichen. So werden mit 0.0005 Gew.% (=5 ppm) bezogen auf das Polymerisat PM bereits erkennbare Wirkungen erzielt. Das Maximum an Wirkung kann bereits mit 0,001 bis 0.004 Gew.% (10-40 ppm), bevorzugt 0.0015 bis 0.003 Gew. % (15-30 ppm) erreicht sein. Setzt man die reduzierend wirkende anorganische Phosphorverbindung in einer ihrer Hydratformen ein, so ist das Kristallwasser bei der Berechnung der Einsatzmenge abzuziehen.

Einsatzmengen höher als 50 ppm bezogen auf das Polymerisat PM bewirken in der Regel keine weitere Verbesserung der optischen Eigenschaften, ja sie können in besonderen Fällen bereits Eigenschaftsverschlechterungen auslösen, wie z. B. eine beginnende irreversible Trübung im Polymerisat, was an niedrigeren Transmissionswerten erkennbar ist.

Die erfindungsgemäßen anorganischen reduzierenden Phosphorverbindungen AP werden in der Regel in Lösung appliziert. Wasser ist als Lösungsmittel geeignet. Vorteilhaft werden die reduzierenden Phosphorverbindungen in konzentrierter Lösung angewandt. Als Richtwert sei eine Konzentration von 50 Gew.-% genannt. Die konzentrierte Lösung wird üblicherweise bei Raumtemperatur angesetzt. Je nach Löse- und Applikationstemperatur sind auch andere Konzentrationen möglich bzw. notwendig, z.B. 5 bis 65 Gew.-%. Bei besonders niedrigen Zusatzmengen an anorganischer, reduzierend wirkender Phosphorverbindung AP wird man die Konzentration in Wasser ebenfalls niedriger wählen, z.B. 10-30 Gew.-%. Es ist überraschend, daß ein so geringes Volumen an reduzierendem Agens, wie es eine konzentrierte Lösung der Phosphorverbindung darstellt, offensichtlich über die gesamte Polymerisatcharge homogen verteilt werden kann.

Es ist aber auch möglich, die reduzierende anorganische Phosphorverbindung in Pulverform, also ohne Verwendung von Lösungsmittel zu applizieren.
Auch wenn es prinzipiell denkbar ist, die einzelnen Komponenten einer Mischung von reduzierenden Phosphorverbindungen nacheinander dem Polymeren zuzugeben, wird man in der Regel zuerst eine Mischung oder Lösung der Komponenten herstellen und diese in einem Schritt dem Polymeren zusetzen. Für die homogene Verteilung ist ein einkomponentiger Stabilisator vorteilhafter.
Die Zugabe von Blaupigmenten oder blauen Farbstoffen zur optischen Neutralisation eines allfälligen Gelbstiches kann zugleich mit den anorganischen, reduzierend wirkenden Phosphorverbindungen erfolgen. In der Regel setzt man 5 bis 50 ppb an Bläuungsmittel zu. Bevorzugt ist ein Gehalt von weniger als 10 ppb. Bläuungsmittel sind käuflich erhältlich. Genannt seien beispielhaft Ceresblau GN oder eine Mischung aus Ultramarinblau 31 zu Ultramarinviolett 11 im Verhältnis 1 zu 4.

Die Zugabe von anorganischen, reduzierend wirkenden Phosphorverbindungen AP in wäßriger Form kann insofern nachteilig sein, als das Wasser im Zuge der Verarbeitung früher oder später auf Schmelztemperatur des Polymeren gebracht wird und dabei zu kleinen Gasbläschen im Polymerisat führen kann. Es wurde überraschend gefunden, daß aliphatische C₁₂-C₂₀-Carbonsäuren, insbesondere Palmitinsäure als Lösungsmittel für die anorganischen, reduzierend wirkenden Phosphorverbindungen AP sehr gut geeignet sind, und die Bildung von Gasbläschen vermieden werden kann. Es werden relativ verdünnte Lösungen von AP in Palmitinsäure hergestellt, z.B.0.1 bis 20 gewichtsprozentige Lösungen. Bevorzugt werden 1 bis 15 gewichtsprozentige Lösungen verwendet, besonders bevorzugt 2 bis 10 gewichtsprozentige Lösungen. Auch das Bläuungsmittel kann in Palmitinsäure gelöst dosiert werden. Die Menge an Palmitinsäure bezogen auf das Polymerisat PM liegt bei 0.01 bis 0.5, bevorzugt bei 0.03 bis 0.3 Gew.-%. Die Zugabe der erfindungsgemäßen, anorganischen, reduzierend wirkenden Phosphorverbindungen AP in Palmitinsäurelösung ist eine bevorzugte Ausführungsform der Erfindung.

### Die Einarbeitung der reduzierend wirkenden anorganischen Phosphorverbindung AP

Die Einarbeitung der reduzierend wirkenden anorganischen Phosphorverbindung AP erfolgt erfindungsgemäß zu einem späten Zeitpunkt der Verarbeitung. Dadurch scheint ein vorzeitiger Zerfall des Entfärbungsmittels vermeidbar zu sein. Es wird vor allem nicht länger andauernden hohen thermischen Belastungen ausgesetzt. Die Zugabe erfolgt generell nach Abschluß der Polymerisationsreaktion.

Zu diesem Zeitpunkt enthält das Polymerisat PM weniger als 1 Gew.-% Restmonomeres, bevorzugt weniger als 0.5 Gew.-% Restmonomeres.

Eine Möglichkeit der Zugabe der reduzierend wirkenden anorganischen Phosphorverbindung AP besteht in ihrer kontinuierlichen Einführung in den PMMA-Schmelzestrom im Entgasungsextruder. Die Dosierstelle wird bevorzugt so gewählt, daß die Zugabe in die bereits entgaste Schmelze erfolgt.
Der Vorteil der Zugabe in den Schmelzestrom im Entgasungsextruder ist, daß kein zusätzlicher Verarbeitungsschritt notwendig wird, und sie sich nahtlos an die Polymerisation anschließen kann. Nach Abkühlen und Zerteilen erhält man eine Formmasse FM in Teilchenform, die die anorganischen, reduzierend wirkenden Phosphorverbindungen AP in homogener Verteilung und in einer wirksamen Konzentration enthält. Bei der Herstellung von Formkörpern FK aus diesem Material, insbesondere von Plattenmaterial tritt die erfindungsgemäße Wirkung ein: Der Kanteneindruck ist neutral.

Eine weitere Möglichkeit ist die Zugabe der reduzierend wirkenden anorganischen Phosphorverbindung AP zum fertigen Polymerisat PM, also zur "Standard-Formmasse" im Compoundierschritt.
Zur Durchführung dieses erfindungsgemäßen Verfahrensschrittes soll das Polymerisat PM in Teilchenform vorliegen. Geeignet sind z.B. besonders Granulate oder auch Mahlgut in den verschiedensten Korngrößen. Bevorzugt wählt man eine mittlere Teilchengröße von 1-5mm.

Die Vermischung der reduzierenden anorganischen Phosphorverbindung AP mit dem in Teilchenform vorliegenden Polymeren PM beim Compoundierschritt erfolgt üblicherweise zunächst in langsam laufenden Mischaggregaten wie beispielsweise Trommel-, Rhönrad- oder Doppelkammerpflugscharmischern. Die langsam laufenden Aggregate bewirken eine Vermischung, ohne daß die Phasengrenzen aufgehoben werden (vgl. Ullmanns Enzyklopädie der technischen Chemie, 4. Auflage, Bd. 2, Seiten 282 bis 311, Verlag Chemie, Weinheim, New York, 1980). Diese Mischung wird im nachfolgenden Verarbeitungsschritt des Aufschmelzens thermoplastisch aufbereitet. Man verwendet hierzu wiederum Extruder, oder allgemein gesprochen, heizbare Mischaggregate bei den dafür geeigneten Temperaturen, in der Regel zwischen 220 und 280 °C. Beispiele sind Ein- oder Mehrschneckenextruder oder Extruder mit oszillierender Schnecke sowie gegebenenfalls zusätzlich mit Scherstiften. Mit diesem Verfahren können die erfindungsgemäßen Formmassen FM in Granulatkorngrößen von beispielsweise 1 bis 5 mm hergestellt werden.
Anschließend kann wieder die formgebende Verarbeitung einsetzen. Dazu sind gebräuchlichen Verfahren der Technik wie Spritzgießen, Extrudieren, Pressen, Sintern, sowie auch andere Formgebungsverfahren geeignet. Der Gestaltung der Formkörper FK sind keine Grenzen gesetzt.

Eine weitere Zugabevariation besteht darin, die anorganischen, reduzierend wirkenden Phosphorverbindungen AP in Form eines sogenannten Masterbatches bei der formgebenden Verarbeitung zuzusetzen. Dabei wird ein kleiner Teil der Formmasse, die bereits in granulierter oder gemahlener Form vorliegt, in einem separaten Extruder aufgeschmolzen, und die reduzierend wirkenden anorganischen Phosphorverbindungen AP der Schmelze zugesetzt. Sie können hier z.B. als Lösung zudosiert werden, oder sie wurden bereits vorher mit der granulierten Formmasse vermischt. Die die anorganischen, reduzierend wirkenden Phosphorverbindungen AP in relativ konzentrierter Form enthaltende Schmelze wird im Extruder mit der Hauptmenge der Formmasse vereinigt und dabei auf die wirksame, erfindungsgemäße Konzentration verdünnt. Nach anschließender formgebender Verarbeitung des resultierenden Granulates erhält man auch hier die erfindungsgemäßen Formkörper FK.
Weitere Zugabemodalitäten sind denkbar, wobei die Zugabe auf jeden Fall zum im wesentlichen auspolymerisierten Polymerisat PM erfolgen muß, um die erfindungsgemäßen Vorteile erzielen zu können.

### Vorteilhafte Wirkungen der Erfindung

Das Verfahren der Einarbeitung der reduzierenden anorganischen Phosphorverbindung ist in der Regel ein einzelner, einfacher Verfahrensschritt, weil das Stabilisierungsmittel als eine Komponente zugesetzt wird. Es ist vorteilhaft, daß in das übliche Herstellverfahren selbst nicht eingegriffen zu werden braucht, da das Polymerisat PM, die "Standard-Formmasse", ein gängiges Produkt ist und im großtechnischen Maßstabe hergestellt wird. Bezüglich der Menge und der chemischen Natur der reduzierenden anorganischen Phosphorverbindung AP ist das Verfahren sehr kostengünstig: Es wird nur wenig Stabilisator gebraucht, und gerade im Fall des Natriumhypophosphits ist er besonders preisgünstig.
Wichtig sind die anwendungstechnischen Vorteile. So ist der erfindungsgemäße Formkörper FK nach Durchführung des erfindungsgemäßen Verfahrens auch in dicker Schicht praktisch farblos. Zur Messung des Gelbwertes müssen Probekörper in Form von Prismen oder Quadern hergestellt werden, die eine Messung durch eine 100 mm dicke Schicht erlauben. Üblicherweise bedient man sich Probekörper in den Abmessungen von 45x45x100 mm. Ihr Gelbwert oder Yᵢ-Gelbindex - er wird nach DIN 6167 (D65/10°) bzw. nach ASTM D 1925 gemessen - liegt bei erfindungsgemäßer Herstellung unter Zusatz von anorganischen, reduzierend wirkenden Phosphorverbindungen für eine Schichtdicke von 100 mm um mindestens 40 % niedriger als bei Probekörpern, die nicht erfindungsgemäß, also ohne Verwendung von anorganischen, reduzierend wirkenden Phosphorverbindungen, hergestellt wurden.
In der Regel liegen die Gelbwerte sogar um 50 % niedriger.
Anstelle des Gelbwertes kann auch die Transmission eines Blockes mit 100 mm Schichtdicke zur Charakterisierung der optischen Eigenschaften herangezogen werden. Die Transmission eines erfindungsgemäß hergestellten Blockes liegt nahe dem theoretischen Wert von 92% Transmission, nämlich bei 89 bis 92 %.
Auch diese Messungen lassen erkennen, daß die Zugabe von anorganischen, reduzierend wirkenden Phosphorverbindungen AP in erfindungsgemäßer Konzentration kaum eine Verschlechterung der Transmission selbst in so dicker Schicht hervorruft.
Verwendet man für die anorganischen, reduzierend wirkenden Phosphorverbindungen als Lösungsmittel statt Wasser Palmitinsäure, so vermeidet man eine allfällige Entstehung von Wasserdampfbläschen im Extrudat und erzielt eine besonders homogene Verteilung des reduzierenden Agens.
Das erfindungsgemäße Verfahren erlaubt es schließlich, den Gehalt an Bläuungsmittel in der Formmasse auf unter 10 ppb zu erniedrigen, wodurch der Kanteneindruck des fertigen Formkörpers FK weder gelbstichig, noch schmutziggrau, sondern farbneutral ist.

### BEISPIELE

### Beispiele 1-4

5 kg einer "Standard-Formmasse", aufgebaut aus 96 Gew. % Methylmethacrylat und 4 Gew.% Methylacrylat (Plexiglas® Formmasse 7N der Röhm GmbH, Darmstadt, M_{W} (Gewichtsmittel) ca. 110.000) wird in einem Taumelmischer mit einer 12.5 gewichtsprozentigen wäßrigen Lösung von Natriumhypophosphit gemischt. Der Mengenanteil dieser Lösung wird so variiert, daß im Endprodukt folgende Mengen an anorganischer, reduzierend wirkender Phosphorverbindung enthalten sind:

| | |
|---|---|
| Beispiel 1 | ohne Zusatz (= ein Vergleichsbeispiel) |
| Beispiel 2 | 0.6 g Lösung = 15 ppm Natriumhypophosphit |
| Beispiel 3 | 1.2 g Lösung = 30 ppm Natriumhypophosphit |
| *Beispiel 4 | 2.4 g Lösung = 60 ppm Natriumhypophosphit |

| | |
|---|---|
| * nicht erfindungsgemäß | |

Auch das Bläuungsmittel wird in einer Konzentration von knapp unter 10 ppb, nämlich von 4 bis 9.5 ppb an dieser Stelle zugesetzt. Die Mischung des Granulats mit den Zusätzen wird dann bei 240 °C aufgeschmolzen, extrudiert, gekühlt und zerteilt, wobei die erfindungsgemäße Formmasse FM in Teilchenform resultiert.
Um Probenkörper mit der notwendigen hohen Schichtdicke zu erhalten, wird geschmolzenes Extrudat in Aluminiumwannen aufgefangen, abgekühlt und zu Blöcken von 45x45x100 mm geschnitten. Es werden nur blasenfreie Blöcke ausgewählt. Die Stirnseiten werden mit einem Polierfräser planparallel bearbeitet, bis die Oberfläche glänzend ist.

An diesen Blöcken wird durch die 100 mm lange Längsachse mit dem Spektralphotometer im sichtbaren Wellenlängenbereich zwischen 380 bis 780 nm die Transmission nach DIN 5033 (D65) gemessen und der Gelbwert Yᵢ nach DIN 6167 (D65/10°) bestimmt.

### Beispiele 5-8

Es wird wie in Beipiel 1-4 gearbeitet, mit dem Unterschied, daß anstelle der Formmasse Plexiglas® 7 N die Formmasse Plexiglas® 7 H verwendet wird. Plexiglas® 7 H Formmasse hat dieselbe Zusammensetzung wie Plexiglas® 7 N Formmasse, aber ein höheres Molekulargewicht M_{W} (Gewichtsmittel) von ca. 170.000.

Analog zu den Beispielen 1-4 werden die Polymerisate mit steigenden Mengen an Natriumhypophosphit in 12.5 gewichtsprozentiger wäßriger Lösung compoundiert:

| | |
|---|---|
| Beispiel 5 | ohne Zusatz (= ein Vergleichsbeispiel) |
| Beispiel 6 | 0.6 g = 15 ppm Natriumhypophosphit |
| Beispiel 7 | 1.2 g = 30 ppm Natriumhypophosphit |
| *Beispiel 8 | 2.4 g = 60 ppm Natriumhypophosphit |

| | |
|---|---|
| * nicht erfindungsgemäß | |

### Beispiele 9 und 10

Es wird analog den vorhergehenden Beispielen 5-6 gearbeitet, mit dem Unterschied, daß Natriumhypophosphit in Palmitinsäurelösung zugesetzt wird. In Palmitinsäure wird auch die geringe Menge an Bläuungsmittel (9.5 ppb) gelöst.

Beispiel 9: Zusatz von 0.05 Gew.-% Palmitinsäure ohne Natriumhypophosphit (= ein Vergleichsbeispiel)

Beispiel 10: Zusatz von 0.05 Gew.-% Palmitinsäure mit darin gelösten 0.0015 Gew.-% = 15 ppm Natriumhypophosphit (ein Milliliter Palmitinsäure enthält 36.14 mg an Natriumhypophosphit-Monohydrat, das sind 30 mg Natriumhypophosphit, die Lösung ist somit 3%ig an Natriumhypophosphit).

### Ergebnisse:

| Beispiel Nr | Polymerisat | Natriumhypophosphit | Losungsmittel | Transmission % D65 | | Gelbwert D65 | |
|---|---|---|---|---|---|---|---|
| | | | | 1. Messung | 2. Messung | 1. Messung | 2. Messung |
| 1 (Vergleich) | Plexiglas FM 7N | 0 ppm | - | 90.5 | 90.5 | 2.2 | 2.4 |
| 2 | Plexiglas FM 7N | 15 ppm | Wasser | 90.8 | 90.9 | 1.2 | 1.1 |
| 3 | Plexiglas FM 7N | 30 ppm | Wasser | 90.6 | 90.7 | 1.1 | 1.2 |
| *4 | Plexiglas FM 7N | 60 ppm | Wasser | 91.0 | 90.9 | 1.1 | 0.9 |
| 5 (Vergleich) | Plexiglas FM 7H | 0 ppm | - | 89.8 | 89.6 | 4.9 | 4.8 |
| 6 | Plexiglas FM 7H | 15 ppm | Wasser | 90.0 | 90.3 | 2.7 | 2.5 |
| 7 | Plexiglas FM 7H | 30 ppm | Wasser | 89 3 | 90.1 | 2.3 | 2.2 |
| *8 | Plexiglas FM 7H | 60 ppm | Wasser | 87.5 | 88.2 | 2.3 | 2.4 |
| 9 (Vergleich) | Plexiglas FM 7H | 0 ppm | Palmitinsaure | 90.1 | 90.0 | 4.4 | 4.4 |
| 10 | Plexiglas FM 7H | 15 ppm | Palmitinsaure | 89.7 | 90.7 | 2.5 | 2.5 |

| | | | | | | | |
|---|---|---|---|---|---|---|---|
| * nicht erfindungsgemäß | | | | | | | |

Deutlich erkennt man die Reduktion des Gelbwertes bereits bei Zusätzen von nur 15 ppm Natriumhypophosphit. Die Erhöhung der Dosage bringt keine ausgeprägte Verbesserung des Gelbwertes mehr. In allen erfindungsgemäß hergestellten Probekörpern war der Kanteneindruck farbneutral. Alle 10 Beispiele wurden mit weniger als 10 ppb Bläuungsmittel hergestellt, kommen also für die Verwendung im Lebensmittelsektor in Betracht.

## Patentansprüche

1. Verfahren zur Herstellung von Formmassen FM, deren daraus hergestellte Formkörper FK auch in großer Schichtdicke gelbstichfrei sind und bei einer Schichtdicke von 100 mm eine Transmission von 89 - 92 % [gemessen nach DIN 5033/5036] aufweisen, bestehend aus einem Polymerisat PM, aufgebaut aus 80-100 Gewichtsprozent Methylmethacrylat und 0-20 Gewichtsprozent C₁- bis C₄-Alkylester der Acrylsäure
**dadurch gekennzeichnet,**
**daß** dem Polymerisat PM im auspolymerisierten Zustand 0.0005 bis 0.005 Gewichtsprozent einer oder mehrerer reduzierend wirkender anorganischer Phosphor-Verbindungen AP zugesetzt werden, welche ausgewählt sind aus der Gruppe bestehend aus Phosphinsäure und Phosphonsäure und deren Alkalimetall-, Erdalkalimetall- und Aluminiumsowie deren Ammoniumsalzen, wobei das Ammoniumion mit bis zu vier C₁-C₄-Alkyl- und/oder C₅-C₈-Cycloalkylgruppen substituiert sein kann.

2. Verfahren gemäß Anspruch 1, **dadurch gekennzeichnet, daß** die anorganischen, reduzierend wirkenden Phosphorverbindungen AP in einer Menge von 0.001 bis 0.003 Gew. % bezogen auf die Formmasse FM zugesetzt werden.

3. Verfahren gemäß Anspruch 1 oder 2, **dadurch gekennzeichnet, daß** als anorganische, reduzierend wirkende Phosphorverbindung AP Natriumhypophosphit zugesetzt wird.

4. Verfahren gemäß einem oder mehreren der Ansprüche 1 bis 3, **dadurch gekennzeichnet, daß** die anorganischen, reduzierend wirkenden Phosphorverbindungen AP dem in Teilchenform vorliegenden Polymerisat PM in einem Compoundierschritt zugemischt werden.

5. Verfahren gemäß einem oder mehreren der Ansprüche 1 bis 3, **dadurch gekennzeichnet, daß** die anorganischen, reduzierend wirkenden Phosphorverbindungen AP dem geschmolzenen Polymerisat PM nach dessen Entgasung zugesetzt werden.

6. Verfahren gemäß Anspruch 5, **dadurch gekennzeichnet, daß** die anorganischen, reduzierend wirkenden Phosphorverbindungen AP dem geschmolzenen Polymerisat PM in einem Entgasungsextruder nach der letzten Entgasungszone zugesetzt werden.

7. Verfahren gemäß einem oder mehreren der Ansprüche 1 bis 3, **dadurch gekennzeichnet, daß** die anorganischen, reduzierend wirkenden Phosphorverbindungen AP dem in Teilchenform vorliegenden Polymerisat PM in Form eines Masterbatches zugesetzt werden.

8. Verfahren gemäß einem oder mehreren der Ansprüche 1 bis 7, **dadurch gekennzeichnet, daß** die reduzierend wirkenden anorganischen Phosphorverbindungen AP in wäßriger Lösung zugesetzt werden.

9. Verfahren gemäß Anspruch 8, **dadurch gekennzeichnet, daß** die wäßrige Lösung 5 bis 65 gewichtsprozentig an reduzierend wirkenden anorganischen Phosphorverbindungen AP ist.

10. Verfahren gemäß einem oder mehreren der Ansprüche 1 bis 7, **dadurch gekennzeichnet, daß** die reduzierend wirkenden anorganischen Phosphorverbindungen AP in Palmitinsäure gelöst zugesetzt werden.

11. Verfahren gemäß einem oder mehreren der Ansprüche 1 bis 10, **dadurch gekennzeichnet, daß** dem Polymerisat PM an sich bekannte Bläuungsmittel zugesetzt werden.

12. Verfahren gemäß Anspruch 11, **dadurch gekennzeichnet, daß** die Bläuungsmittel in einer Konzentration von unter 10 ppb bezogen auf die Formmasse FM enthalten sind.

13. Formkörper FK, hergestellt aus einer Formmasse FM gemäß einem oder mehreren der Ansprüche 1 bis 12, **dadurch gekennzeichnet, daß** der Gelbwert gemessen nach DIN 6167 (D 65, 10 °) in einer Schichtdicke von 100 mm um mindestens 40 % niedriger liegt, als der Gelbwert gemessen an einem analog, ohne Zusatz von anorganischen, reduzierend wirkenden Phosphorverbindungen hergestellten Formkörper gleicher Zusammensetzung.

## Claims

1. Process for producing moulding compositions FM, wherein the mouldings FK produced therefrom are free from any tinge of yellow even in the form of a thick layer, and which have a transmittance of 89 - 92 % [measured according to DIN 5033/5036] in a layer thickness of 100 mm, consisting of a polymer PM synthesised from 80-100 percent by weight of methyl methacrylate and 0 - 20 percent by weight of C₁-C₄-alkyl esters of acrylic acid, **characterised in that** 0.0005 to 0.005 percent by weight of one or more inorganic phosphorus compounds AP with a reducing effect are added to the polymer PM in the fully polymerised state, said phosphorus compounds AP being selected from among phosphinic acid and phosphonic acid and the alkali metal, alkaline earth metal and aluminium and ammonium salts thereof, while the ammonium ion may be substituted by up to four C₁-C₄-alkyl and/or C₅-C₈-cycloalkyl groups.

2. Process according to claim 1, **characterised in that** the inorganic phosphorus compounds AP with a reducing effect are added in an amount of from 0.001 to 0.003 percent by weight, based on the moulding composition FM.

3. Process according to claim 1 or 2, **characterised in that** sodium hypophosphite is added as the inorganic phosphorus compound AP with a reducing effect.

4. Process according to one or more of claims 1 to 3, **characterised in that** the inorganic phosphorus compounds AP with a reducing effect are added to the particulate polymer PM in a compounding step.

5. Process according to one or more of claims 1 to 3, **characterised in that** the inorganic phosphorus compounds AP with a reducing effect are added to the molten polymer PM after it has been degassed.

6. Process according to claim 5, **characterised in that** the inorganic phosphorus compounds AP with a reducing effect are added to the molten polymer PM in a degassing extruder after the final degassing zone.

7. Process according to one or more of claims 1 to 3, **characterised in that** the inorganic phosphorus compounds AP with a reducing effect are added to the particulate polymer PM in the form of a master batch.

8. Process according to one or more of claims 1 to 7, **characterised in that** the inorganic phosphorus compounds AP with a reducing effect are added in aqueous solution.

9. Process according to claim 8, **characterised in that** the aqueous solution comprises 5 to 65 percent by weight of inorganic phosphorus compounds AP with a reducing effect.

10. Process according to one or more of claims 1 to 7, **characterised in that** the inorganic phosphorus compounds AP with a reducing effect are added dissolved in palmitic acid.

11. Process according to one or more of claims 1 to 10, **characterised in that** blueing agents known *per se* are added to the polymer PM.

12. Process according to claim 11, **characterised in that** the blueing agents are present in a concentration of less than 10 ppb based on the moulding composition FM.

13. Moulding FK produced from a moulding composition according to one or more of claims 1 to 12, **characterised in that** the yellowness measured according to DIN 6167 (D 65, 10°) in a layer thickness of 100 mm is at least 40% lower than the yellowness measured on a moulding of the same composition produced analogously, without the addition of inorganic phosphorus compounds with a reducing effect.

## Revendications

1. Procédé de production de masses moulables (FM), dont les solides moulés (FK) produits à partir de celles-ci sont exempts de piqûres jaunes même en grande épaisseur de couche, et possèdent à une épaisseur de couche de 100 mm une transmission de 89 - 92 % [mesurée selon la norme DIN 5033/5036], et qui consistent en un polymérisat PM constitué pour 80 à 100 % en poids de méthacrylate de méthyle et pour 0 - 20 % en poids d'ester d'alkyle en C₁ à C₄ d'acide acrylique,
**caractérisé en ce que**
au polymérisat PM à l'état complètement polymérisé on ajoute de 0,0005 à 0,005 % en poids d'un ou plusieurs composés du phosphore anorganiques à action réductrice (AP), choisis dans le groupe comprenant les acides phosphiniques et les acides phosphoniques et leurs sels de métal alcalin, alcalinoterreux, et d'aluminium ainsi que de leurs sels d'ammonium, dans lesquels l'ion ammonium peut être substitué par jusqu'à quatre groupes alkyle en C₁-C₄ et/ou cyclo-alkyle en C₅-C₈.

2. Procédé conformément à la revendication 1,
**caractérisé en ce que**
les composés de phosphore (AP) à action réductrice, anorganiques sont ajoutés en une quantité allant de 0,001 à 0,003 % en poids - rapporté à la masse moulable FM.

3. Procédé conformément à la revendication 1 ou à la revendication 2,
**caractérisé en ce que**
comme composé du phosphore (AP) anorganique à action réductrice, on ajoute de l'hypophosphite de sodium.

4. Procédé conformément à l'une ou à plusieurs des revendications 1 à 3,
**caractérisé en ce que**
les composés du phosphore (AP) anorganiques à action réductrice, sont mélangés au polymérisat (PM) qui se présente sous forme de particules dans une étape de mélange.

5. Procédé conformément à une ou plusieurs des revendications 1 à 3,
**caractérisé en ce que**
les composés du phosphore (AP) anorganiques à action réductrice sont ajoutés au polymérisat (PM) fondu après son dégazage.

6. Procédé conforme à la revendication 5,
**caractérisé en ce que**
les composés du phosphore (AP) anorganiques à action réductrice, sont ajoutés au polymérisat PM fondu dans une extrudeuse à dégazage, après la dernière zone de dégazage.

7. Procédé conformément à l'une ou plusieurs des revendications 1 à 3,
**caractérisé en ce que**
les composés du phosphore (AP) anorganiques à action réductrice, sont ajoutés au polymérisat (PM) qui se présente sous forme de particules, sous la forme d'un lot principal (Masterbatches).

8. Procédé conformément à l'une ou plusieurs des revendications 1 à 7,
**caractérisé en ce que**
les composés du phosphore (AP) anorganiques à action réductrice sont ajoutés en solution aqueuse.

9. Procédé conformément à la revendication 8,
**caractérisé en ce que**
la solution aqueuse contient de 5 à 65 % en poids en composés du phosphore (AP) anorganiques à action réductrice.

10. Procédé conformément à l'une ou plusieurs des revendications 1 à 7,
**caractérisé en ce que**
les composés du phosphore (AP) anorganiques à action réductrice sont ajoutés dessous dans l'acide palmitique.

11. Procédé conformément à l'une ou plusieurs des revendications 1 à 10,
**caractérisé en ce qu'**
au polymérisat PM on ajoute des agents de bleuissement connus en soi.

12. Procédé conformément à la revendication 11,
**caractérisé en ce que**
les agents de bleuissement sont présents à une concentration de moins de 10 ppb rapporté à la masse moulable FM.

13. Solides moulables FK produits à partir d'une masse moulable FM conformément à l'une ou plusieurs des revendications 1 à 12,
**caractérisé en ce que**
la valeur de jaune mesurée selon la norme DIN 6167 (D 65, 10°) se situe à une épaisseur de couche de 100 mm à au moins 40 % en dessous de la valeur de jaune mesurée sur un solide moulable produit d'une manière analogue, sans addition de composés du phosphore anorganiques à action réductrice de même composition.
